# EUROPEAN PATENT SPECIFICATION

(11) **EP 4 152 530 B1**
(45) Date of publication and mention of the grant of the patent: **12.02.2025**
(21) Application number: 21196873.0
(22) Date of filing: 15.09.2021
(51) Int. Cl.: H01S 3/00, H01S 3/067, H01S 3/08022, H01S 3/0941, H01S 3/23

(54) **METHOD FOR CONDITIONING PULSED LASER RADIATION FOR SUBSEQUENT AMPLIFICATION, AND APPARATUS THEREOF**
VERFAHREN ZUR KONDITIONIERUNG VON GEPULSTER LASERSTRAHLUNG ZUR NACHFOLGENDEN VERSTÄRKUNG UND VORRICHTUNG DAFÜR
PROCÉDÉ DE CONDITIONNEMENT DE RAYONNEMENT LASER PULSÉ POUR AMPLIFICATION ULTÉRIEURE, ET APPAREIL CORRESPONDANT

(43) Date of publication of application: 22.03.2023
(73) Proprietor: UAB "Ekspla", 02300 Vilnius (LT)
(72) Inventor: MICHAILOVAS, Andrejus, 02300 Vilnius (LT); BARTULEVICIUS, Tadas, 02300 Vilnius (LT)
(74) Representative: Draugeliene, Virgina Adolfina

(56) References cited:
- WO-A1-2021/059003
- CN-A- 112 600 061
- US-A1- 2008 080 570

## Description

### Field of the invention

The invention relates to methods and optical systems for laser pulse duration control. Particularly, this invention relates to pulse stretching methods through multiple spectral filtering and amplification of radiation. More particularly, this invention relates to fiber-optic active ring delay lines.

### Background of the invention

Laser systems generating pulsed radiation are known in the art. Nanosecond picosecond and femtosecond pulses are generated by various optical systems based on different active and nonlinear media, and of different complexity and size. Nanosecond lasers, based on narrowband active media and gain-switching or Q-switching mainly, provide pulses with duration from 500ps to 500ns. Ultrafast lasers mainly rely on mode-locking, and typically generate pulses with duration from 50fs to 50ps. There is a gap of pulse duration values between 50ps and 500ps hardly achieved directly from simple-configuration laser oscillators. Additional optical modules must be used to condition the pulse.

An important aspect in the contemporary laser market is a versatility of the laser source. The versatility means a possibility to use the same laser source for various applications, or for various regimes of the same application. It comprises an ability to select parameters of laser radiation: wavelength, power, energy, pulse duration and/or repetition rate. One of the most important parameters to be freely selected is the pulse duration.

Pulse duration control is useful in areas such as semiconductor lithography or other micro machining applications, metrology, biomedical diagnostics, dermatology etc. Lasers with sub-nanosecond pulse duration are the key component of the lidars to increase the detection accuracy. Also, the temporal stretching of pulses of ultrafast oscillators is required in oscillator-amplifier systems for achieving high output powers without detrimental effects.

A wide range of pulse stretching techniques is reviewed in R Khare and P. K. Shulka, "Temporal Stretching of Laser Pulses," Coherence and ultrashort pulse laser emission, p. 205 (2010). Commonly used methods to increase pulse duration are: insertion of etalons within the laser oscillator cavity or pulse chirping. Both comprise broadband active media. Etalons work as non-absorptive filters and narrow the spectrum, while pulse chirping dephase spectral components. In both cases it results in pulse elongation. In order to obtain transform-limited pulses with durations in the range of hundreds of picoseconds at wavelength range close to 1µm, the conditioned spectral bandwidth must be of the order of 0.005nm. For applications, which are insensitive to pulse phase modulation, pulse conditioning can be done by dispersive chirping. In the latter case, the bandwidth remains broad but spectral components are dephased. In the oscillator-amplifier systems, amplifiers (especially, multipass amplifiers) themselves narrow the spectrum proportionally to amplification bandwidth (the phenomenon called gain-narrowing). One could rely on this spectrum narrowing and the resulting pulse elongation, but this approach is limited, since the pulse duration cannot be freely selected without changing the gain or the number of passes. See, e. g. J. Kleinbauer et al., "13-W picosecond Nd:GdVO4 regenerative amplifier with 200-kHz repetition rate," Applied Physics B 81, p. 163 (2005); K. Michailovas et al., "Combined Yb/Nd Driver for Optical Parametric Chirped Pulse Amplifiers, " Optics Express 24, p. 22261 (2016); Y. Huang et al., "A high peak power and high beam quality sub-nanosecond Nd:YVO4 Laser system at 1 kHz repetition rate without SRS process", Applied Sciences 9, p. 5247 (2019).

N. G. Mikheev et al., "Picosecond pulsed high-peak-power lasers," in K. Yamanouchi et al. (eds.), "Progress in photon science" 119, p. 63-87 (Springer Series in Chemical Physics, Springer International Publishing, 2019) describes a solid-state laser oscillator-regenerative amplifier system using an etalon for pulse duration control. Three 300µm-thickness Fabry-Perot etalons with different reflection coatings - 72%, 79% and 89% - were prepared (partially reflective coatings were applied on both sides of thin plates). Using the etalon inside a solid-state oscillator (1064nm) allowed to increase initial 16ps pulse duration up to 120ps, 180ps and 400ps, respectively. Only a slight adjustment of the width of etalon spectral transmission and thus pulse duration could be performed by the etalon rotation. Gapless tuning of pulse duration in a wide range using a single etalon was not possible.

Q. S. Pang et al., "Adjustable picosecond pulse duration in a LD end pumped SESAM passively mode-locked Nd:YVO4 laser," Laser Physics 21, p. 1009 (2011) describes a passively mode-locked picosecond Nd:YVO₄ laser with adjustable pulse durations. The pulse duration was adjusted from 20ps to 80ps using intracavity etalons of different thicknesses. To achieve pulse duration adjustment in a wide range, an interchange of the etalons was necessary.

M. Lührmann et al., "Efficient generation of mode-locked pulses in Nd:YVO4 with a pulse duration adjustable between 34ps and 1ns," Optics Express 17, p. 6177 (2009) describes a solid-state laser oscillator which uses a combination of two etalons from a set of 9 prepared etalons. Using different combinations of etalons, pulses with durations from 34ps to 1ns were obtained. Fine tuning of the pulse durations of the 10-30% order by inclination of the etalons was possible, with a slightly lower generation stability.

Solid etalons suffer from increased intra-etalon intensity proportional to their quality factor. This causes thermal distortions of the beam, failure of the reflective coatings, etc. Another problem with etalons is limited range of bandwidth tuning, which can be performed by angular rotation. Air-spaced etalons - consisting of two parallel plates with a space between them filled with air, nitrogen, or other suitable gas - have wider tunability range (the free spectral range can be changed by either changing the gap width, or the gas pressure in the gap), however are more complex in exploitation and expensive. Using of diffraction gratings inside resonators alone or with etalons provides enhanced line-narrowing and bandwidth tuning capabilities, however requires robust and precise mechanical components for reliable operation of the laser. All aforementioned means do not allow smooth tuning of the short pulse duration and suffer from complexity and poor optomechanical stability.

Fiber Bragg gratings (FBGs) are used as spectral filters in fiber-optic laser systems. Potentially, FBGs could be used inside the mode-locked laser oscillators but do not allow smooth pulse duration tuning in a wide range. Z. Wen et al., "Effects of spectral filtering on pulse dynamics in a mode-locked fiber laser with a bandwidth tunable filter," JOSA B 36, p. 952 (2019); and J. Shang et al., "The investigation on ultrafast pulse formation in a Tm-Ho-codoped mode-locking fiber oscillator," Molecules 26, p. 3460 (2021).

In chirped pulse amplification (CPA) systems, pulse duration can be controlled by changing an overall dispersion of the system. If dispersions of the stretcher and compressor do not compensate each other, the resultant pulse is chirped and is longer than the bandwidth-limited duration. The bandwidth-limited (also called transform-limited or Fourier-transform-limited) is the shortest possible pulse duration defined by the pulse spectrum, see e. g. J. C. Diels and W. Rudolph, "Ultrashort laser pulse phenomena," (New York, Academic, 2006).

Dispersion of free-space grating or prism stretchers and compressors can be adjusted by changing a separation between dispersive elements (see, C. Vikrant et al., "Single-diffraction-grating and grism pulse compressors," JOSA B 27, p. 619 (2010)). The broader the spectrum, the larger dimensions of the stretcher and compressor are needed. Also, large dispersion is needed for achieving highly chirped pulses. Finally, high requirements for aberration-free pulse stretching in free-space module need to be fulfilled. Anyway, for a selected parameter set of the stretcher/compressor, pulse width tunability is quite limited.

The fiber-optic counterpart, the chirped fiber Bragg grating (abbrev. CFBG), can be tuned thermally or by mechanical stretching. T. Bartulevicius et al., "Compact fiber CPA system based on a CFBG stretcher and CVBG compressor with matched dispersion profile," Optics Express 25, p. 19856 (2017) demonstrated pulse stretching in a fiber laser system with a compact CFBG placed in a thermal unit. Linearly up-chirped pulses of 13ps duration and 10.6nm bandwidth from the oscillator were stretched up to 230ps retaining a linear chirp. Variation of pulse width while changing a linear thermal gradient along the 50mm-length CFBG was gradual.

In X. Zhang et al., "Pulse duration tunable fiber CPA system based on thermally dispersion tuning of chirped fiber Bragg grating," Optik 127 (20), p. 8728 (2016) similar dispersion tuning mechanism was employed to build a pulse width tunable fiber-based CPA system. The fiber CPA system provided femtosecond pulses, and the CFBG temperature tuning range was 0°C to 50°C with pulse tuning accuracy of about 3fs/°C.

Chirped volume Bragg gratings (CVBGs) can also be used for pulse stretching in fiber CPA systems, see L. B. Glebov et al., "Volume-chirped Bragg gratings: monolithic components for stretching and compression of ultrashort laser pulses," Optical Engineering 53, 051514 (2014). Large CVBGs stand higher laser powers and high GDD can be achieved to stretch pulses from femtosecond to sub-ns or ns duration. D. Schimpf et al., "Self-phase modulation compensated by positive dispersion in chirped-pulse systems," Optics Express 17, p. 4997 (2009) demonstrated pulse stretching from 400fs to 190ps with a 4.2nm-bandpass CVBG (3cm in length) at 1029.6nm. However, CVBG often suffer from spatial chirp, also can impose spectral amplitude modulation. As mentioned before, for pulse duration control, tunability of spectral parameters is required, however, tunability of CVBG is highly limited since thermal or mechanical impacts distort the beam.

Finally, stretched pulses by dispersion-management replicate a shape of a spectrum in time. Moreover, the shape of a spectrum during the chirped pulse amplification is further deformed. The deformations occur because the spectral components at different parts of the pulse envelope experience different amplification. Spectral components at a tail of the pulse are amplified weaker because an amplifier becomes depleted. The different amplification of different spectral components results in the deformation of the pulse envelope and the shift of the spectrum towards the spectral components at the leading part of chirped pulse. The higher amplification of temporally stretched pulse, the higher deformation of initial pulse shape and duration occurs. It means that this method of pulse duration tuning is not applicable for seeding high power/energy laser amplifiers.

Solutions with ring delay lines, particularly with fiber-optic ring delay lines (fiber loops) configured for conditioning pulsed laser radiation are most relevant to this invention. Fiber loops are used as filters, other conditioners of the spectrum, interferometers for the measurement of the linewidth of lasers, particularly of narrow-linewidth lasers (less than 3-4nm) or pulse train generators.

J. Kojima and Q.-V. Nguyen, "Laser pulse-stretching with multiple optical ring cavities," Appl. Opt. 41, p. 6360 (2002) describes a laser pulse stretcher comprising multiple free-space ring delay lines. The pulse stretcher concept is based on a simple three- or multiple-mirror optical ring cavity. The ring cavity traps and stores a portion of the circulating laser pulse, subsequently releasing the stored pulse over a longer period of time which depends on a beam splitter reflectivity and a delay time in the optical cavity. Multiple shifted in time pulses created by three such cavities of different time delays are recombined by the final beam splitter into a superposition of many pulses, which appear as a single pulse of a longer temporal width. The optimum lengths of said ring cavities are dictated by the input pulse duration, and the shortest stage of the pulse stretcher cavity should have a roundtrip time equal to the input pulse duration (FWHM, i.e. full-width at half intensity level). The method is suitable to form long-nanosecond pulses from short-nanosecond pulses; however, it is not suitable for initial pulses with picosecond duration since such short ring cavity for making overlapping pulses cannot be physically realized. Free-space realization of this method is sensitive to spatial misalignments of the mirrors and deteriorate the beam profile due to diffraction.

J. W. Dawson et al., "An improved delayed self-heterodyne interferometer for linewidth measurements," in IEEE Photonics Technology Letters 4, p. 1063 (1992) describes a fiber-optic ring delay line used as the interferometer for linewidth measurements. It comprises
- a 2x2 fiber coupler,
- a single fiber loop (a 11 km-length fiber) with
- a broadband fiber Fabry-Perot filter (40GHz FWHM bandwidth which is equivalent to 0.32nm at 1537nm),
- an optical amplifier (a doped active fiber),
- and an acousto-optic modulator for frequency shifting at every roundtrip.

Conditioning of the spectrum by the acousto-optic modulator is done for beat note detection - between the original laser spectrum and the frequency-shifted one (after multiple roundtrips) - thus to measure the laser linewidth. The spectral filter was included to prevent from oscillation of the loop itself. The improvement of interferometric measurements was achieved by adding the amplifier which compensates losses in the long delay line. The device was not intended for pulse duration control.

A. Wang et al., "Generation of flat-spectrum wideband chaos by fiber ring resonator," Applied Physics Letters 102, 031112 (2013) describes a fiber-optic ring resonator, acting as a bandwidth enhancer, which can directly widen a narrowband chaotic signal from a distributed feedback semiconductor laser. The fiber-optic ring resonator comprises
- a 2x2 fiber coupler,
- a single fiber loop equipped with
- an optical filter (a tunable fiber Bragg grating with a 20GHz FWHM bandwidth which is equivalent to 0.16nm at 1554nm) and
- an amplifier;
- said optical filter and amplifier together adjust the optical field circulating in the fiber loop.

Said ring resonator generates spectrally uniform wideband chaos. The incoherent interference of the circulating fields produces wideband chaos with uniform power spectrum density distribution. As the roundtrip time of the ring resonator decreases down to coherence time (0.03ns) of the chaotic laser, the spectrum remains broader than 20GHz (0.16nm). Chaotic lasers with chaotic intensity fluctuations are suitable for very specific applications (secure communications and random number generation) but not for applications which need a pulse of well-defined duration and repetition rate.

US patent no. 4652079 (H. J. Shaw et al.) describes fiber-optic ring delay lines for high repetition rate pulse train generation. A single passive fiber loop produces a train of pulses with separation in the order of 10ns. The pulse repetition rate can yet be increased by adding another fiber loop with a delay time only slightly shorter than 10ns and thus after some time a high repetition rate train of pulses is built from a pulse arriving to the loop, and from the pulses circulating in the loop. In the passive loops without compensation of losses, amplitudes of pulses circulating in the loop steadily decrease. Addition of an amplifier ensures restoration of pulse energy, however, an interference of circulating in the loop and new input pulses results in unpredictable amplitude modulation. Since no spectral conditioning is performed, pulse duration does not vary or changes uncontrollably.

Other ring delay lines are known in the art, e. g. WO2009042024A2 (A. Starodoumov et al.), K.-H. Wei et al., "High power burst-mode operated sub-nanosecond fiber laser based on 20/125µm highly doped Yb fiber," Laser Physics 26, 025104 (2016), and WO2021059003 (A. Michailovas et al.). However, none of them are used for laser pulse duration control.

### Technical problem to be solved

The aim of this invention is to provide a simple method and a compact laser system for conditioning pulsed laser radiation in order to realize pulse duration control of a seed pulse for subsequent amplification. A particular aim of this invention is pulse duration control in sub-nanosecond pulse duration range. Yet more particular aim of this invention is generation of pulses with variable pulse durations from 50ps to 1ns, in some specific cases - up to 10ns. It is also an aim to obtain pulses without amplitude modulation or spikes, a bell-shaped pulse profile is preferable, which will preserve their shape and duration after amplification. An apparatus of this invention should be suitable to be used as a separate module in a oscillator-amplifier system between the oscillator (seeder) and the amplifier for conditioning a pulse for subsequent amplification.

### Disclosure of the essence of the invention

The essence of the technical solution according to proposed invention is a method as defined in claim 1.

A bandwidth of the spectral filtering element is not broader than 0.04nm at 1 µm wavelength spectral region, and pulse duration at half intensity level of pulses within said series of pulses of variable pulse duration is in the range from 50ps to 400ps, and it is a bandwidth-limited duration.

A bandwidth of the spectral filtering element is not broader than 0.01nm at 1µm wavelength spectral region, and pulse duration at half intensity level of pulses within said series of pulses of variable pulse duration is in the range from 170ps to 1ns, and it is a bandwidth-limited duration.

Pulse duration at half intensity level of said pulse with a predetermined duration is in the range from 50ps to 10ns, and it is a bandwidth-limited duration.

A pulse repetition rate of the pulse with a predetermined duration is in the range from a single pulse to a repetition rate of 10MHz.

According to the present invention, an apparatus for conditioning pulsed laser radiation for subsequent amplification, which is a multipass active spectral filter, is defined in claim 6.

In a preferred embodiment, the $
bandwidth of the spectral filtering element is not broader than 0.04nm at 1µm wavelength spectral region, and pulses within said series of pulses feature a bandwidth-limited duration at half intensity level in the range from 50ps to 400ps.

In another preferred embodiment, bandwidth of the spectral filtering element is not broader than 0.01nm at 1µm wavelength spectral region, and pulses within said series of pulses feature a bandwidth-limited duration at half intensity level in the range from 170ps to 1ns.

In another preferred embodiment, the bandwidth of the spectral filtering element is such that within said series of pulses feature a bandwidth-limited duration at half intensity level in the range from 50ps to 10ns.

In another preferred embodiment, the repetition rate of said series of pulses with variable durations is in the range from a single series to a repetition rate of 10MHz.

In another preferred embodiment, the laser beam splitter is a single 2x2 fiber splitter with a splitting ratio equal to 50/50, one output port of the laser beam splitter is connected with one input port of the laser beam splitter by the ring delay line comprising:
a fiber-coupled circulator which directs laser radiation to a side arm of the ring delay line,
a fiber-optic spectral filter which narrows a spectrum of said laser radiation and is located in said side arm of the ring delay line,
a segment of a doped optical fiber which compensates losses of the elements of the ring delay line and the laser beam splitter,
a segment of an undoped fiber serving as the means for laser beam delivery and for achieving a required roundtrip time *T*_{RT} of the ring delay line.

In another preferred embodiment, the fiber-optic spectral filter is a fiber Bragg grating serving as a reflective bandpass spectral filter of a bandwidth not broader than 0.05nm.

In another preferred embodiment, the fiber-optic spectral filter is a set of fiber Bragg gratings with different spectral bandwidths and located in different branches of the side arm of the ring delay line; under control of a driving signal, a commutator incorporated inside said side arm directs laser radiation to a first branch or to a second branch of the side arm.

In another preferred embodiment, the roundtrip time *T*_{RT} of the ring delay line is in the range from 10ns to 20ns.

### Advantages of the invention

The solution of this invention has numerous advantages. It is simple and compact. Spectral narrowing is done by multiple spectral filtering by a narrowband bandpass filter, therefore, a transform-limited pulse of a smooth intensity profile is formed. Spectral shaping of radiation assures that the pulse shape and duration will be minimally affected by amplification in consequent amplification stages, i. e. pulses after the amplifier chain are the same as those at the input of the amplifier. A step of pulse duration increase after every roundtrip in the loop is mainly determined by a shape and width of a transfer function of the spectral filter. Using a ring delay line with an amplifier incorporated inside, pulse energy losses are compensated during as many roundtrips as needed to achieve the desired pulse duration. Among other advantages, there is a wide pulse duration tuning range spanning from tens of picoseconds to nanoseconds. The laser apparatus incorporating the pulse duration tuning property is versatile and attractive for various applications. The apparatus can be realized for any spectral range where absorption of optical components is absent.

### Brief description of the drawings

Fig.1 - a functional diagram of the method and apparatus of this invention.
Fig.2 - a particular embodiment of the apparatus of this invention.
Fig.3 - a first example of incorporation of the apparatus of this invention in the laser system.
Fig.4 - a second example of incorporation of the apparatus of this invention in the laser system.
Fig.5 - a theoretically calculated pulse duration range for a first bandwidth value of the spectral filtering element.
Fig.6 - a theoretically calculated pulse duration range for a second bandwidth value of the spectral filtering element.
Fig.7 - a fiber-optic oscillator output spectrum along with a spectral filter reflection spectrum, which were used in experimental validation of the method presented in this invention.
Fig.8 - a measured pulse duration range in the experimental setup for validation of the method presented in this invention.
Fig.9 - pulse envelopes of pulses in the experimental setup for validation of the method presented in this invention.
Fig.10 - another particular embodiment of the apparatus of this present invention.
Fig.11 - yet another particular embodiment of the apparatus of this present invention.

### Detailed description of the invention

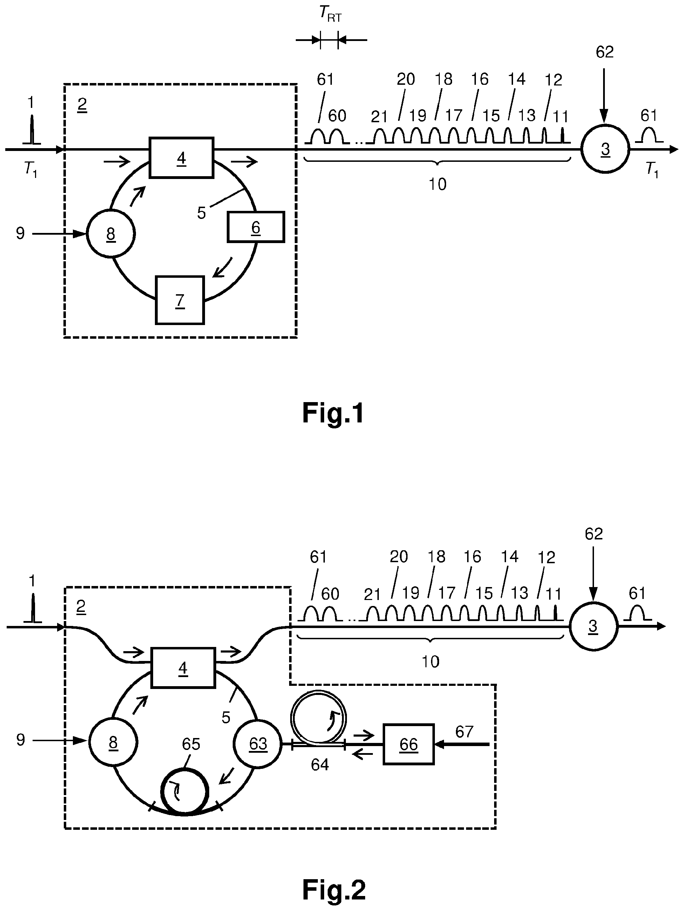

Fig.1 demonstrates a functional diagram of a method and an apparatus for conditioning pulsed laser radiation. Said conditioning of radiation is multiple beam splitting, filtering and amplification in a multipass active spectral filter in order to perform pulse duration control. According to this method, a pulse with a predetermined duration and energy is generated for subsequent amplification.

The proposed method comprises:
(a) coupling of an input laser radiation into a multipass active spectral filter, said multipass active spectral filter comprising a laser beam splitter and a ring delay line,
(b) splitting of the input laser radiation into two parts by the laser beam splitter and delivering the one part of the input laser radiation to an output of the multipass active spectral filter and the other part of the input laser radiation into the ring delay line,
(c) executing spectral conditioning of radiation, power conditioning of radiation, and preventing from oscillation inside said ring delay line,
(d) splitting of radiation propagating in the ring delay line into a first part and a second part by the laser beam splitter; delivering said first part to the output of the multipass active spectral filter and delivering said second part back to the ring delay line,
   further, steps (c) and (d) are repeated in each roundtrip of radiation in the ring delay line, wherein
   said spectral conditioning of radiation in said ring delay line is performed by spectral filtering with a spectral filtering element of a bandwidth not broader than 0.1nm and with a Gaussian, Lorentzian or other bell-shaped transmission or reflection function,
   said power conditioning in said ring delay line is performed by amplification of radiation with an optical amplifier,
   said preventing from oscillation inside the ring delay line is executed by modulating losses in the ring delay line with an optical switch,
(e) forming a series of pulses with variable durations at the output of said multipass active spectral filter from said one part of the input laser radiation, which is directed to the output of the multipass active spectral filter, and said first parts of the laser radiation propagating in the ring delay line after each roundtrip, as a conditioned laser radiation and
(f) selecting a pulse with a predetermined duration in the sub-nanosecond or a-few-nanosecond range from the series of pulses by pulse picking with an optical switch.

An input laser radiation 1 is coupled into a multipass active spectral filter 2 which comprises:
- a laser beam splitter or a group of beam splitters and couplers 4 (hereinafter called BS 4), and
- a ring delay line 5 with a spectral filtering element 6, an optical amplifier 7, and an optical switch 8 incorporated inside. The optical amplifier 7 is inserted in order to compensate the propagation, spectral filtering and beam splitting losses. The optical switch 8 is driven by a signal 9 and controls losses in the ring delay line 5, thus prevents from oscillation before coupling the input laser pulse in the spectral filter. Additional elements may be present in the ring delay line 5. On the other hand, the listed elements are sufficient for producing pulses of variable durations. One realization of said ring delay line is fiber-optic. A fiber-optic ring delay line 5 ensures guidance of a laser beam without diffraction. Another realization of said ring delay line is free-space. For free-space ring delay line 5, image relay optics is needed to prevent diffraction spreading of a circulating laser beam. The multipass active spectral filter 2 provides a series 10 of pulses 11-61 of variable durations.

A roundtrip time *T*_{RT} of the ring delay line 5 is shorter than an inter-pulse period *T*₁ of input laser pulses 1. The BS 4 splits the input laser pulse 1 into two replicas: one pulse propagates straight to an output, another one is directed to the ring delay line 5. The delay line 5 forms a loop, i. e. after propagating through the delay line 5, the circulating pulse returns back to the BS 4. After splitting, one part of a pulse is delivered to the output, the other returns to the delay line 5. In this way, a series of output pulses from the one circulating inside the loop is produced. After a predetermined number of roundtrips, control signal 9 is applied to the optical switch 8 which closes the delay line 5, thus the series of pulses 11-61 ends up abruptly. Pulses 11-61 of the series 10 are separated by the roundtrip time *T*_{RT} of the ring delay line 5.

A distinct feature of the ring delay line 5 of this invention is that it has the spectral filtering element 6 (a bandpass filter), which narrows the spectrum of radiation. A bell-shaped transfer function of the spectral filtering element 6 is required. Spectral narrowing of initially bandwidth-limited pulse circulating in the loop results in pulse elongation. Repetition of spectral filtering event is needed for significant pulse duration change and/or flexible control of it. Any central wavelength falling within the amplifier's spectral band can be selected as well.

If a splitting ratio of the BS 4 element is 50/50, the first pulse 11 of the series 10 has exactly a half amplitude of that of the input laser pulse 1. The second pulse 12 is a pulse which is obtained after one roundtrip in the ring delay line 5: it experiences spectral filtering, amplification and splitting. The first pulse 11 does not undergo spectral filtering, and thus no change of duration occurs, while every next pulse from subsequent pulses 12-61 is longer than a previous one. The optical switch 3 driven by a signal 62 selects the pulse 61 of a desired duration. It can be transmitted to a consequent amplification stage of the laser system. Amplification system can be any - employing modern laser technologies - so it will not be discussed in the description of the present invention.

If a bandwidth of the spectral filtering element 6 is much narrower than a bandwidth of the input laser pulse 1, the most significant spectral filtering occurs during the first roundtrip. Therefore, the largest change in the pulse duration occurs between the first pulse 11 and the second pulse 12. Subsequent pulse elongation goes on gradually. It depends on the transfer function - transmittance T for a transmissive type, or reflectance R for a reflective type - of the spectral filtering element 6. To make the output laser pulse 61 notably longer than the input laser pulse 1, many roundtrips are necessary.

Said optical amplifier 7 is necessary to compensate roundtrip losses. Gain of the optical amplifier can be controlled actively in order to obtain pulses 11-61 with equal amplitudes (as shown in Fig.1) or equal energies.

The series 10 of pulses repeat with the *T*₁ period. Any pulse from the series 10 can be selected by the optical switch 3 and delivered to the output (pulses with the same duration repeat with the *T*₁ period).

In general, the multipass active spectral filter 2 of this invention can be realized as a fiber-optic or as a free-space optical system. The optical switches 8 and 3 are acousto-optic or electro-optic modulators (fiber-coupled or free-space). However, the free-space solution requires additional elements to compensate diffraction of the laser beam circulating in the loop. Thus, the fiber-optic implementation of the multipass active spectral filter 2 is preferable.

Fig.2 depicts a particular embodiment of the multipass active spectral filter 2 of this present invention. It is an all-in-fiber solution. The BS 4 is a 2x2 fiber coupler with a splitting ratio, for example, equal to 50/50. The ring delay line 5 connects a second output port with a second input port of the BS 4, and comprises:
- a circulator 63,
- an active fiber 64 (a segment of a doped fiber),
- a passive fiber 65 (a segment of an undoped fiber),
- a narrowband fiber Bragg grating (FBG) 66.

The circulator 63 ensures one-directional propagation of radiation, and directs radiation to the side arm of the delay line 5. The active fiber 64 is pumped by the laser diode radiation 67 and performs as the optical amplifier 7 in Fig.1. The active fiber 64 in the side arm is pumped through the FBG 66 (no wavelength multiplexer is needed). Different pumping geometry can be implemented too.

The FBG 66 serves as the reflective bandpass spectral filter 6 in Fig.1. It features a narrow spectral reflection function. To obtain pulses of 100ps duration and longer at 1030nm or 1064nm wavelengths, a bandwidth of radiation should be narrowed down to 0.02nm or less. The bandwidth of radiation in the loop is influenced by an initial bandwidth of radiation, transfer function of the fiber Bragg grating, amplification band of the optical amplifier, and a number of roundtrips.

A length of the passive fiber 65 is selected depending on a required total length of the ring delay line 5. The total optical length *L*_{delay} of the delay line 5 is defined by the roundtrip time *T*_{RT} which in turn is defined by the required temporal pulse separation. A minimum pulse separation *T*_{RT} is defined by a speed of the optical switch 3 to be able to select a single pulse and also by durations of pulses (to prevent a mutual interference). On the other hand, *T*_{RT} limits the number of roundtrips and the longest achievable pulse duration in the pulse series 10 (for a fixed input pulse repetition rate).

To avoid spectrum modification (broadening) due to self-phase modulation care should be taken for controlling the energy of the pulse which circulates in the loop 5.

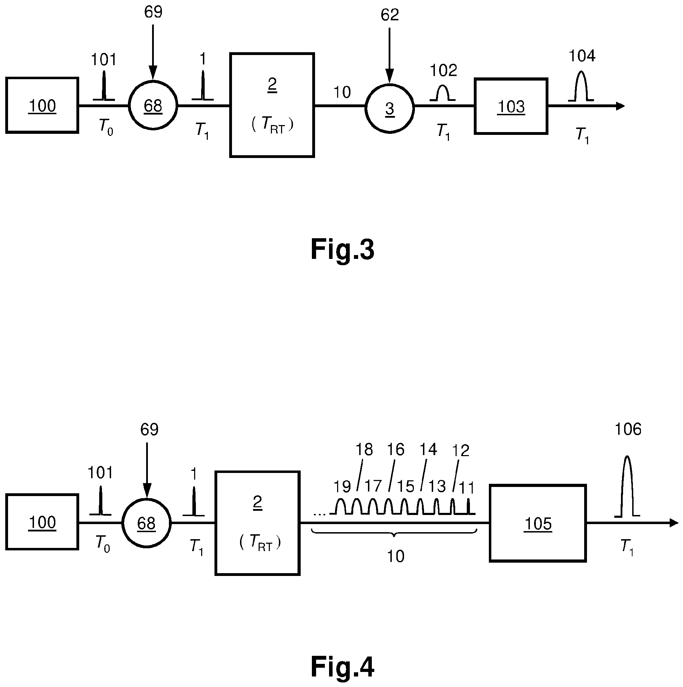

Fig.3 illustrates a first example of incorporation of the multipass active spectral filter 2 in the laser system to obtain pulses of variable durations. The system consists of:
- a laser oscillator 100 emitting pulses 101 of high repetition rate (pulse period *T*₀),
- an optical switch 68 driven by a driving signal 69, which reduces the pulse repetition rate (pulse period *T*₁ > *T*₀),
- the multipass active spectral filter 2, which forms a series 10 of pulses with incrementally growing durations,
- the optical switch 3, which selects a pulse 102 of a desired duration,
- an energy conditioner 103 to increase an energy of an output pulse 104.

A typical pulse repetition rate of mode-locked oscillators is in the range from 50MHz to 100MHz. In the 50MHz-repetition-rate train, pulses are separated by *T*₀ = 20ns. This separation is too small to form the series 10 with many pulses separated by a reasonable time interval. Therefore, pulse repetition rate must be reduced.

As an example, the optical switch 68 reduces the input pulse repetition rate down to the range from 100.0 kHz to 1.0 MHz. Therefore, *T*₁ is in the range from 10.0µs down to 1.0µs, respectively. One may select pulse separation inside the series 10 of pulses to be *T*_{RT} = 20ns. This separation ensures that the optical switch (pulse picker) 3 featuring 5ns to 7ns opening/closing times selects a single pulse 102 from the series of pulses without clipping adjacent pulses. The sufficient roundtrip time *T*_{RT} also ensures that the optical switch 8 inside the module 2 starts and stops pulse circulation totally and reliably. Having a roundtrip time *T*_{RT} = 20ns, 50 roundtrips can be performed during *T*₁ = 1.0 µs period, or 500 roundtrips during *T*₁ = 10.0 µs period.

Other pulse repetition rates are possible as well. For certain applications, a very low repetition rate, e. g. 0.1Hz or even a single pulse is sufficient. This in turn leads to the long interpulse period *T*₁ of input pulses (many roundtrips with *T*_{RT} = 20ns can be performed).

A typical pulse duration of mode-locked fiber lasers is in the range from several hundreds of femtoseconds up to several tens of picoseconds (bandwidth from 0.05nm to 5nm at 1µm wavelength). The spectral filtering element of the module 2 enables to increase pulse duration up to several hundreds of picoseconds or even up to a few nanoseconds after multiple spectral filtering cycles. Energy of the selected pulse 102 depends on amplification conditions in the ring delay line of the multipass active spectral filter 2. The energy conditioner 103 boosts the output pulse 104 up to an energy required for subsequent amplification stages. The system of Fig.3 may be used, for example, as a seeder for the laser amplifier, which in turn will provide a high-energy pulse of a desired duration.

Fig.4 illustrates another example of incorporation of the multipass active spectral filter 2 in the laser system. Now, the optical switch 3 is omitted since the whole series 10 of pulses is sent to the next element 105 which is a regenerative amplifier. An optical switch of the regenerative amplifier 105 traps a single pulse of the series 10 in the resonator, while other pulses are rejected without amplification. Gain of the optical amplifier 7 (see Fig.1) of the multipass active spectral filter 2 can be actively varied by controlling the pump radiation 67 power if equal energies of pulses in the series 10 are required. Without the active control, the first pulse 11 in the series 10 of pulses will be significantly higher than other pulses, and energies of other pulses 12-19 will depend on the pump 67 power. Pulses 11-19 have incrementally growing durations. Any pulse from the series 10 may be trapped in the regenerative amplifier 105 to provide a high-energy pulse 106 of a desired duration. The pulse 106 can be amplified in the regenerative amplifier 105 up to tens of millijoules.

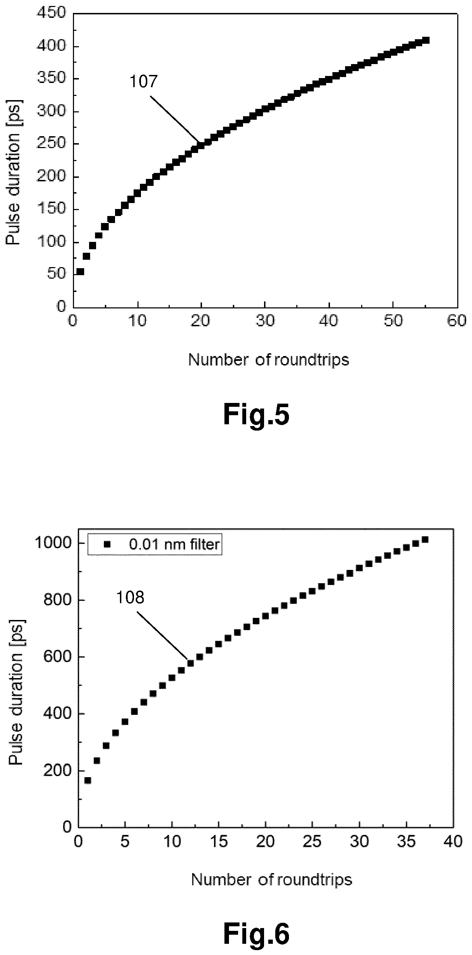

Fig.5 depicts a theoretically calculated dependence 107 of pulse duration on the number of roundtrips inside the multipass active spectral filter 2 for the case of 0.037nm bandwidth (FWHM) of the spectral filtering element 6. An initial transform-limited pulse duration is 2.78ps. If the transfer function of the spectral filtering element is Gaussian-shaped, and if no additional spectral effects occur, pulse duration increases as *C***N*^{0.5}, where N is a roundtrip number. The rate coefficient *C* depends on the bandwidth of the spectral filter. The most significant change of pulse duration occurs during a first roundtrip. At 1064nm wavelength, the pulse duration variation range is from 50ps to 400ps.

Fig.6 depicts a theoretically calculated dependence 108 of pulse duration on the number of roundtrips inside the multipass active spectral filter 2 for the case of 0.01nm bandwidth (FWHM) of the spectral filtering element 6. An initial transform-limited pulse duration is 2.78ps. The rate coefficient C is now higher. After one roundtrip, pulse duration now becomes 166ps; while after just 37 roundtrips, 1ns pulse duration (at 1064nm wavelength) can be achieved.

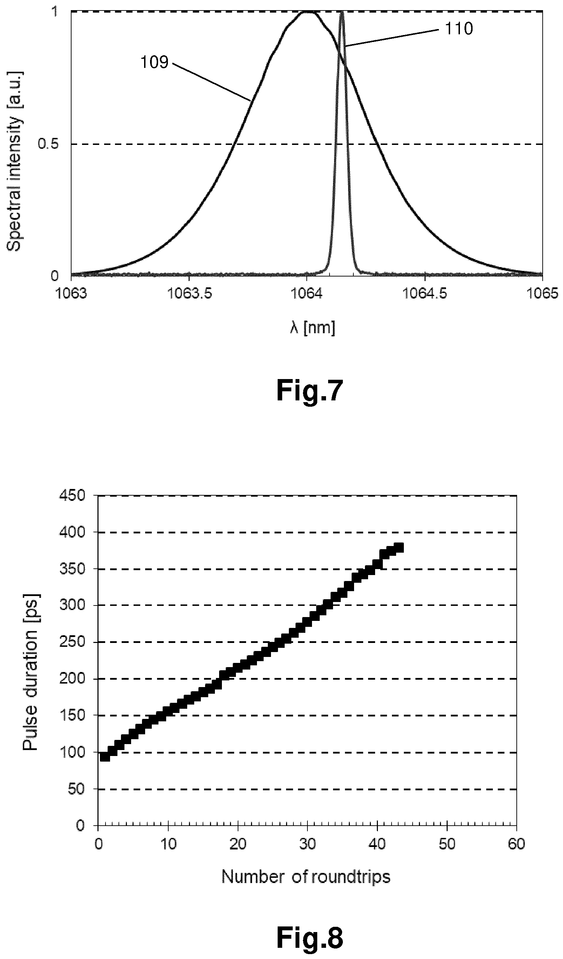

Fig.7 illustrates a fiber-optic oscillator output spectrum along with a spectral filter reflection spectrum, which were used in experimental validation of the method presented in this invention. Here 109 is the spectrum of radiation from the fiber-optic oscillator 100, 110 is the reflection spectrum of the fiber Bragg grating 66 operating as the narrowband bandpass filter of the multipass active spectral filter 2. A bandwidth of the spectrum of the oscillator radiation spectrum 109 was 0.6nm. The measured 3ps pulse duration is slightly longer than a theoretical bandwidth-limited duration equal to 2.78ps. This indicated that the oscillator pulses 1 were slightly chirped. A 0.037nm bandwidth of the fiber Bragg grating 66 reflection spectrum is much narrower than the spectrum of the initial radiation and is detuned by 0.15nm from maximum.

Fig.8 depicts a measured pulse duration dependence on the number of roundtrips in the experimental setup for validation of the method presented in this invention. A deviation from the theoretical curve given in Fig.5 may be present due to a uncontrolled spectral shaping or a non-Gaussian shape of the FBG reflectance. Therefore, the experimental growth of pulse duration on the roundtrip number was even faster.

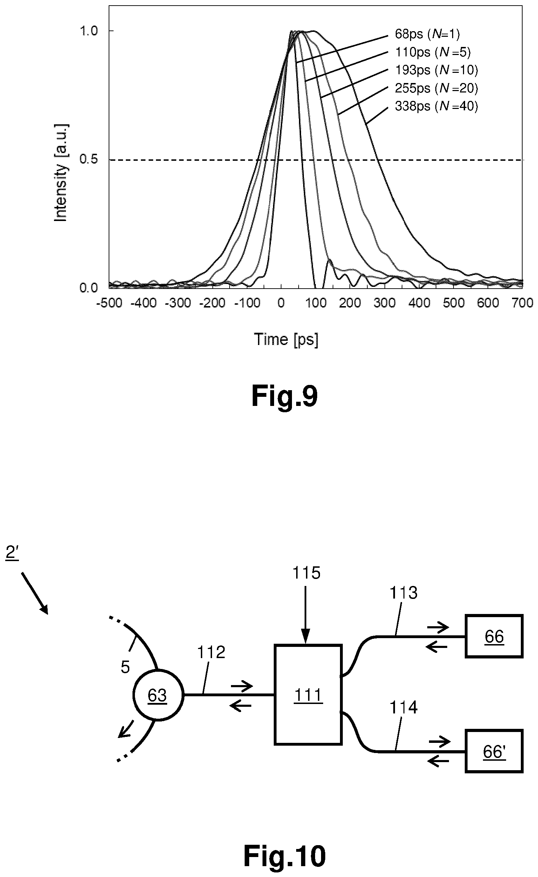

Fig.9 depicts the measured shapes and durations of pulses after 1, 5, 10, 20 and 40 roundtrips in the ring delay line 5 of the apparatus made according to this invention, i. e. the 2^{nd}, the 6^{th}, the 11^{th}, the 21^{st} and the 41^{st} pulse of the pulse series 10. It is an evidence that pulse envelopes are smooth and have no amplitude modulation. The shapes of the pulses are near Gaussian therefore fit well the requirements for the subsequent amplification.

Fig.10 illustrates an alternative embodiment of the apparatus of this present invention. The modified fiber-optic multipass active spectral filter 2' has an optical commutator 111, which directs a circulating pulse from a side arm 112 to its first branch 113, or to its second branch 114. Said branches 113, 114 have reflective fiber Bragg gratings 66 and 66', which differ in reflected spectra bandwidth. Under control of a driving signal 115, the commutator 111 directs the circulating pulse to the first branch 113 with the FBG 66 featuring a broad reflection bandwidth, thus pulse duration growth rate within the output pulse series 10 is small, and the duration tuning is performed in the range of shorter pulse durations (e. g. from 50ps to 400ps). Alternatively, under control of a driving signal 115, the commutator 111 directs the circulating pulse to the second branch 114 with the FBG 66' featuring a narrow reflection bandwidth, thus pulse duration has a high growth rate, and the duration tuning is performed in the range of longer pulse durations (e. g. from 170ps to 1ns). This allows to obtain different pulse duration ranges from a single apparatus. Switching between branches 113 or 114 may also be done in the middle of the cycle, i. e. before the next input pulse 1 arrives. This allows to achieve notable pulse elongation during the fixed time period *T*₁ and with a desired duration selection resolution. Therefore, the apparatus of this invention can also be adapted for relatively-high pulse repetition rate (up to 10MHz) systems.

An active fiber may be present in the side arm 112. Alternatively, different active fibers may be present in said branches 113, 114 of the side arm 112. Yet alternatively, the active fiber can be inserted in the main length of the ring delay line 5.

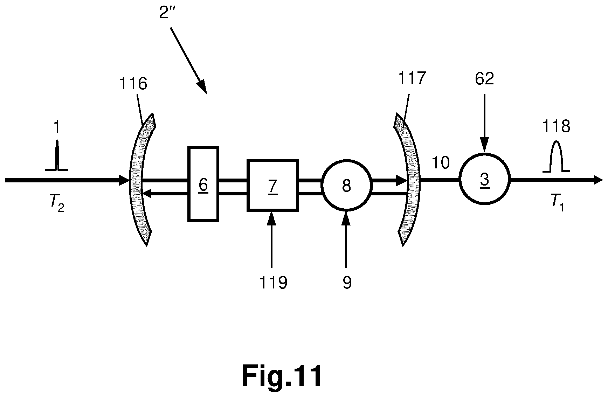

Fig.11 demonstrates a free-space equivalent of the apparatus of this invention. The free-space multipass active spectral filter 2" is a two-mirror optical cavity, which has the same functional components:
- the spectral filtering element 6,
- the optical amplifier 7, and
- the optical switch 8.

The free-space cavity is formed preferably by concave mirrors 116, 117 to compensate laser beam diffraction. Mirrors 116, 117 are semi-transparent in order to partially transmit the pulse. The part of the pulse, which stays inside the cavity, experiences spectral filtering at every roundtrip. The optical switch 3 outside said optical cavity selects a pulse 118 of a desired duration. Again, the spectral filtering element 6 is a narrowband bandpass filter, which narrows the spectrum and thus elongates a pulse circulating inside. The optical switch 8 prevents from independent oscillation of the cavity and closes the cavity when a required pulse duration is achieved. The optical amplifier 7 compensates losses of the cavity and, what is most important, losses due to spectral filtering. On the other hand, some additional energy conditioning may be done by the optical amplifier 7. The optical amplifier 7 can be actively controlled by a signal 119 to vary amplification conditions throughout a cycle and to obtain any shape of the series 10 of elongated pulses. The preferable roundtrip time of the multipass active spectral filter 2" is *T*_{RT} = 20ns. In the simplest two-mirror cavity of Fig.11, the pulse propagates through the spectral filtering element 6 and the amplifier 7 twice per roundtrip. Other configurations of the free-space cavity are also possible.

Other alternative configurations of the apparatus for pulse duration control according to the method of this invention are possible. The scope of the invention is defended by the appended claims.

## Claims

1. Method for conditioning pulsed laser radiation for subsequent amplification, comprising:
(a) coupling of an input laser radiation (1) into a multipass active spectral filter (2), said multipass active spectral filter (2) comprising a laser beam splitter (4) and a ring delay line (5),
(b) splitting of the input laser radiation (1) into two parts by the laser beam splitter (4) and delivering one part of the input laser radiation (1) to an output of the multipass active spectral filter (2) and the other part of the input laser radiation (1) into the ring delay line (5),
(c) executing a predetermined spectral conditioning of radiation, power conditioning of radiation, and preventing from oscillation inside said ring delay line (5),
(d) splitting of radiation propagating in the ring delay line (5) into a first part and a second part by the laser beam splitter (4); delivering said first part to the output of the multipass active spectral filter (2) and delivering said second part back to the ring delay line (5),
further, steps (c) and (d) are repeated in each roundtrip of radiation in the ring delay line (5), **wherein**
said predetermined spectral conditioning of radiation in said ring delay line (5) is performed by spectral filtering destined to narrow the spectrum with a spectral filtering element (6) of a bandwidth not broader than 0.1nm and with a Gaussian, Lorentzian, or other bell-shaped transmission or reflection function,
said power conditioning in said ring delay line (5) is performed by amplification of radiation with an optical amplifier (7),
said preventing from oscillation inside the ring delay line (5) is executed by modulating losses in the ring delay line (5) with an optical switch (8),
(e) forming a conditioned laser radiation as a series (10) of pulses with variable durations at the output of said multipass active spectral filter (2) formed from said one part of the input laser radiation (1), which is directed to the output of the multipass active spectral filter (2), and said first parts of the laser radiation propagating in the ring delay line (5) after each roundtrip, wherein the repetition of the spectral conditioning is needed for obtaining the variable pulse duration, and $
(f) selecting a pulse (61, 102 or 118) with a predetermined duration in the sub-nanosecond or a-few-nanosecond range from the series (10) of pulses with variable durations.

2. Method according to claim 1, wherein
a bandwidth of the spectral filtering element (6) is not broader than 0.04nm at 1µm wavelength spectral region, and the bandwidth is such that pulse duration at a half intensity level of pulses (11-61) within said series (10) of pulses of variable pulse duration is in the range from 50ps to 400ps, and it is a bandwidth-limited duration.

3. Method according to claim 1, wherein
a bandwidth of the spectral filtering element (6) is not broader than 0.01nm at 1µm wavelength spectral region, and the bandwidth is such that pulse duration at a half intensity level of pulses (11-61) within said series (10) of pulses of variable pulse duration is in the range from 170ps to 1ns, and it is a bandwidth-limited duration.

4. Method according to claim 1, wherein the bandwidth of the spectral filtering element (6) is such that pulse duration at a half intensity level of said pulse (61, 102 or 118) with a predetermined duration is in the range from 50ps to 10ns, and it is a bandwidth-limited duration.

5. Method according to any of the preceding claims, wherein
a pulse repetition rate of the pulse (61, 102 or 118) with a predetermined duration is in the range from a single pulse to a repetition rate of 10MHz.

6. Apparatus for conditioning pulsed laser radiation for subsequent amplification, which is a multipass active spectral filter (2), comprising:
- a ring delay line (5), which includes a spectral conditioning element, a power conditioning element, and an element for preventing from oscillation of the ring delay line (5) itself; and
- a laser beam splitter (4) having two input ports and two output ports and configured to split an input laser radiation (1) into two parts and to direct the one part to an output of the multipass active spectral filter (2) and the other part into said ring delay line (5) and, after each roundtrip of radiation in the ring delay line (5), to split a laser radiation propagating in the ring delay line (5) into a first part and into a second part and to direct said first part to the output of the multipass active spectral filter (2) and said second part back to the ring delay line (5), **wherein**
- said spectral conditioning element is a spectral filtering element (6) configured to narrow the spectrum with a Gaussian, Lorentzian, or other bell-shaped transmission or reflection function, wherein the spectral filtering element (6) has a bandwidth not broader than 0.1nm,
- said power conditioning element is an optical amplifier (7),
- said element for preventing from oscillation of the ring delay line (5) itself is an optical switch (8) which modulates losses in the ring delay line (5), and
- at the output of said multipass active spectral filter (2), a conditioned laser radiation is formed as a series (10) of pulses with variable durations in the sub-nanosecond or a-few-nanosecond range which is formed from said one part of the input laser radiation (1), which is directed to the output of the multipass active spectral filter (2), and said first parts of laser radiation propagating in the ring delay line (5) after each roundtrip, and $
- wherein the the variable pulse duration is obtained by the repetition of the passing through the spectral filtering element (6) in the ring delay line, and $
- the apparatus comprises an optical switch (3) that is configured to select a pulse (61,102 or 118) with a predetermined duration in the sub-nanosecond or a-few-nanosecond range from the series (10) of pulses.

7. Apparatus according to claim 6, wherein the bandwidth of the spectral filtering element (6) is not broader than 0.04nm at 1µm wavelength spectral region, and the bandwidth is such that pulses within said series (10) of pulses feature a bandwidth-limited duration at a half intensity level in the range from 50ps to 400ps.

8. Apparatus according to claim 6, wherein the bandwidth of the spectral filtering element (6) is not broader than 0.01nm at 1µm wavelength spectral region, and the bandwidth is such that pulses within said series (10) of pulses feature a bandwidth-limited duration at a half intensity level in the range from 170ps to 1ns.

9. Apparatus according to claim 6, wherein the bandwidth is such that pulses within said series (10) of pulses feature a bandwidth-limited duration at a half intensity level in the range from 50ps to 10ns.

10. 44. Apparatus according to any of claims 6-9, wherein the apparatus is configured such that a repetition rate of said series (10) of pulses with variable durations is in the range from a single series to a repetition rate of 10MHz.

11. Apparatus according to any of claims 6-10, wherein said laser beam splitter (4) is a single 2x2 fiber splitter with a splitting ratio equal to 50/50, one output port of the laser beam splitter (4) is connected with one input port of the laser beam splitter (4) by the ring delay line (5) comprising:
- a fiber-coupled circulator (63) which directs laser radiation to a side arm of the ring delay line (5),
- a fiber-optic spectral filter which narrows a spectrum of said laser radiation and is located in said side arm of the ring delay line (5),
- a segment of a doped optical fiber (64) which compensates losses of the elements of the ring delay line (5) and the laser beam splitter (4),
- a segment of an undoped fiber (65) serving as the means for laser beam delivery and for achieving a required roundtrip time *T*_{RT} of the ring delay line (5).

12. Apparatus according to claim 11, wherein said fiber-optic spectral filter is a fiber Bragg grating (66) serving as a reflective bandpass spectral filter of a bandwidth not broader than 0.05nm.

13. Apparatus according to claim 11, wherein said fiber-optic spectral filter is a set of fiber Bragg gratings (66, 66') with different spectral bandwidths and located in different branches (113, 114) of the side arm (112) of the ring delay line (5);
under control of a driving signal (115), a commutator (111) incorporated inside said side arm (112) directs laser radiation to a first branch (113) or to a second branch (114) of the side arm (112).

14. Apparatus according to any of claims 11-13, wherein the roundtrip time *T*_{RT} of the ring delay line (5) is in the range from 10ns to 20ns.

## Patentansprüche

1. Verfahren zur Konditionierung von gepulster Laserstrahlung zur nachfolgenden Verstärkung, umfassend:
(a) Koppeln einer Eingangslaserstrahlung (1) in ein aktives Multipass-Spektralfilter (2), wobei das aktive Multipass-Spektralfilter (2) einen Laserstrahlteiler (4) und eine Ringverzögerungsleitung (5) umfasst,
(b) Aufteilen der Eingangslaserstrahlung (1) durch den Laserstrahlteiler (4) in zwei Teile, und Übergeben des einen Teils der Eingangslaserstrahlung (1) an einen Ausgang des aktiven Multipass-Spektralfilters (2) und des anderen Teils der Eingangslaserstrahlung (1) in die Ringverzögerungsleitung (5),
(c) Ausführen einer vorbestimmten Spektralkonditionierung von Strahlung, Leistungskonditionierung von Strahlung und Verhindern einer Oszillation in der Ringverzögerungsleitung (5),
(d) Aufteilen von Strahlung, die sich in der Ringverzögerungsleitung (5) ausbreitet, in einen ersten Teil und einen zweiten Teil durch den Laserstrahlteiler (4); Übergeben des ersten Teils an den Ausgang des aktiven Multipass-Spektralfilters (2), und Übergeben des zweiten Teils zurück an die Ringverzögerungsleitung (5),
ferner werden die Schritte (c) und (d) bei jedem Strahlungsumlauf in der Ringverzögerungsleitung (5) wiederholt, **wobei**
die vorbestimmte Spektralkonditionierung von Strahlung in der Ringverzögerungsleitung (5) durch Spektralfilterung durchgeführt wird, die bestimmt ist, das Spektrum mit einem Spektralfilterelement (6) mit einer Bandbreite von nicht breiter als 0,1 nm und mit einer Gaußschen, Lorenztschen oder anderen glockenförmigen Transmissions- oder Reflexionsfunktion zu verengen,
die Leistungskonditionierung in der Ringverzögerungsleitung (5) durch eine Strahlungsverstärkung mit einem optischen Verstärker (7) durchgeführt wird,
das Verhindern einer Oszillation innerhalb der Ringverzögerungsleitung (5) durch Modulieren von Verlusten in der Ringverzögerungsleitung (5) mit einem optischen Schalter (8) ausgeführt wird,
(e) Ausbilden einer konditionierten Laserstrahlung als eine Serie (10) von Impulsen mit variablen Dauern an dem Ausgang des aktiven Multipass-Spektralfilters (2), die aus dem einen Teil der Eingangslaserstrahlung (1), die auf den Ausgang des aktiven Multipass-Spektralfilters (2) gelenkt ist, und den ersten Teilen der Laserstrahlung ausgebildet wird, die sich nach jedem Umlauf in der Ringverzögerungsleitung (5) ausbreiten, wobei die Wiederholung der Spektralkonditionierung notwendig ist, um die variable Impulsdauer zu erhalten, und
(f) Auswählen eines Impulses (61,102 oder 118) mit einer vorbestimmten Dauer in dem Bereich eines Bruchteils einer Nanosekunde oder von wenigen Nanosekunden aus der Serie (10) von Impulsen mit variablen Dauern.

2. Verfahren nach Anspruch 1, wobei
eine Bandbreite des Spektralfilterelements (6) nicht breiter als 0,04 nm in einem Wellenlängenspektralbereich von 1 µm ist, und die Bandbreite derart ist, dass eine Impulsdauer bei einem halben Intensitätspegel der Impulse (11 bis 61) innerhalb der Serie (10) von Impulsen von variabler Impulsdauer im Bereich von 50 ps bis 400 ps liegt und es sich um eine bandbreitenbegrenzte Dauer handelt.

3. Verfahren nach Anspruch 1, wobei
eine Bandbreite des Spektralfilterelements (6) nicht breiter als 0,01 nm in einem Wellenlängenspektralbereich von 1 µm ist, und die Bandbreite derart ist, dass eine Impulsdauer bei einen halben Intensitätspegel der Impulse (11 bis 61) innerhalb der Serie (10) von Impulsen von variabler Impulsdauer im Bereich von 170 ps bis 1 ns liegt, und es sich um eine bandbreitenbegrenzte Dauer handelt.

4. Verfahren nach Anspruch 1, wobei die Bandbreite des Spektralfilterelements (6) derart ist, dass die Impulsdauer bei einem halben Intensitätspegel der Impulse (61,102 oder 118) mit einer vorbestimmten Dauer in dem Bereich von 50 ps bis 10 ns liegt, und es sich um eine bandbreitenbegrenzte Dauer handelt.

5. Verfahren nach einem der vorhergehenden Ansprüche, wobei
eine Impulswiederholungsfrequenz des Impulses (61, 102 oder 118) mit einer vorbestimmten Dauer in dem Bereich von einem Einzelimpuls bis zu einer Wiederholungsfrequenz von 10 MHz liegt.

6. Vorrichtung zur Konditionierung von gepulster Laserstrahlung zur nachfolgenden Verstärkung, die ein aktives Multipass-Spektralfilter (2) ist, umfassend:
- eine Ringverzögerungsleitung (5), die ein Spektralkonditionierungselement, ein Leistungskonditionierungselement und ein Element zum Verhindern einer Oszillation in der Ringverzögerungsleitung (5) selbst enthält; und
- einen Laserstrahlteiler (4) mit zwei Eingangsanschlüssen und zwei Ausgangsanschlüssen und konfiguriert, um eine Eingangslaserstrahlung (1) in zwei Teile aufzuteilen und den einen Teil an einen Ausgang des aktiven Multipass-Spektralfilters (2) und den anderen Teil in die Ringverzögerungsleitung (5) zu lenken, und nach jedem Strahlungsumlauf in der Ringverzögerungsleitung (5) eine Laserstrahlung, die sich in der Ringverzögerungsleitung (5) ausbreitet, in einen ersten Teil und in einen zweiten Teil zu teilen und den ersten Teil zu dem Ausgang des aktiven Multipass-Spektralfilters (2) und den zweiten Teil zurück in die Ringverzögerungsleitung (5) zu lenken, **wobei**
- das Spektralkonditionierungselement ein Spektralfilterelement (6) ist, das konfiguriert ist, um das Spektrum mit einer Gaußschen, Lorenztschen oder anderen glockenförmigen Transmissions- oder Reflexionsfunktion zu verengen, wobei das Spektralfilterelement (6) eine Bandbreite von nicht breiter als 0,1 nm aufweist,
- das Leistungskonditionierungselement ein optischer Verstärker (7) ist,
- das Element zum Verhindern einer Oszillation der Ringverzögerungsleitung (5) selbst ein optischer Schalter (8) ist, der Verluste in der Ringverzögerungsleitung (5) moduliert, und
- an dem Ausgang des aktiven Multipass-Spektralfilters (2) eine konditionierte Laserstrahlung als eine Serie (10) von Impulsen mit variablen Dauern in dem Bereich eines Bruchteils einer Nanosekunde oder von wenigen Nanosekunden ausgebildet wird, die aus dem einen Teil der Eingangslaserstrahlung (1), der auf den Ausgang des aktiven Multipass-Spektralfilters (2) gelenkt wird, und den ersten Teilen der Laserstrahlung ausgebildet wird, die sich nach jedem Umlauf in der Ringverzögerungsleitung (5) ausbreiten, und
- wobei die variable Impulsdauer durch die Wiederholung des Durchlaufs durch das Spektralfilterelement (6) in der Ringverzögerungsleitung erhalten wird, und
- die Vorrichtung einen optischen Schalter (3) umfasst, der konfiguriert ist, um einen Impuls (61, 102 oder 118) mit einer vorbestimmten Dauer in dem Bereich eines Bruchteils einer Nanosekunde oder von wenigen Nanosekunden aus der Serie (10) von Impulsen auszuwählen.

7. Vorrichtung nach Anspruch 6, wobei
die Bandbreite des Spektralfilterelements (6) nicht breiter als 0,04 nm in einem Wellenlängenspektralbereich von 1 µm ist, und die Bandbreite derart ist, dass Impulse innerhalb der Serie (10) von Impulsen eine bandbreitenbegrenzte Dauer bei einem halben Intensitätspegel im Bereich von 50 ps bis 400 ps aufweisen.

8. Vorrichtung nach Anspruch 6, wobei
die Bandbreite des Spektralfilterelements (6) nicht breiter als 0,01 nm in einem Wellenlängenspektralbereich von 1 µm ist, und die Bandbreite derart ist, dass Impulse innerhalb der Serie (10) von Impulsen eine bandbreitenbegrenzte Dauer bei einen halben Intensitätspegel im Bereich von 170 ps bis 1 ns aufweisen.

9. Vorrichtung nach Anspruch 6, wobei
die Bandbreite derart ist, dass Impulse innerhalb der Serie (10) von Impulsen eine bandbreitenbegrenzte Dauer bei einem halben Intensitätspegel in dem Bereich von 50 ps bis 10 ns aufweisen.

10. Vorrichtung nach einem der Ansprüche 6 bis 9, wobei
die Vorrichtung derart konfiguriert ist, dass eine Wiederholungsfrequenz der Serie (10) von Impulsen mit variablen Dauern in dem Bereich von einer einzelnen Serie bis zu einer Wiederholungsfrequenz von 10 MHz liegt.

11. Vorrichtung nach einem der Ansprüche 6 bis 10, wobei
der Laserstrahlteiler (4) ein einzelner 2x2-Faserteiler mit einem Aufteilungsverhältnis gleich 50/50 ist, ein Ausgangsanschluss des Laserstrahlteilers (4) mit einem Eingangsanschluss des Laserstrahlteilers (4) durch die Ringverzögerungsleitung (5) verbunden ist, umfassend:
- einen fasergekoppelten Zirkulator (63), der Laserstrahlung zu einem Seitenarm der Ringverzögerungsleitung (5) lenkt,
- ein faseroptischer Spektralfilter, der ein Spektrum der Laserstrahlung verengt und sich in dem Seitenarm der Ringverzögerungsleitung (5) befindet,
- ein Segment einer dotierten optischen Faser (64), die Verluste der Elemente der Ringverzögerungsleitung (5) und des Laserstrahlteilers (4) kompensiert,
- ein Segment einer nicht dotierten Faser (65), das als Mittel zur Laserstrahlabgabe und zum Erreichen einer erforderlichen Umlaufzeit *T*_{RT} der Ringverzögerungsleitung (5) dient.

12. Vorrichtung nach Anspruch 11, wobei
das faseroptische Spektralfilter ein Faser-Bragg-Gitter (66) ist, das als ein reflektierender Bandpass-Spektralfilter mit einer Bandbreite von nicht breiter als 0,05 nm dient.

13. Vorrichtung nach Anspruch 11, wobei
das faseroptische Spektralfilter eine Gruppe von Faser-Bragg-Gitter (66, 66') mit verschiedenen Spektralbandbreiten ist und sich in verschiedenen Verzweigungen (113, 114) des Seitenarms (112) der Ringverzögerungsleitung (5) befindet;
unter der Kontrolle eines Steuersignals (115) lenkt ein Umschalter (111), der in den Seitenarm (112) integriert ist, Laserstrahlung zu einer ersten Verzweigung (113) oder zu einer zweiten Verzweigung (114) des Seitenarms (112).

14. Vorrichtung nach einem der Ansprüche 11 bis 13, wobei
die Umlaufzeit *T*_{RT} der Ringverzögerungsleitung (5) in dem Bereich von 10 ns bis 20 ns liegt.

## Revendications

1. Procédé de conditionnement d'un rayonnement laser pulsé pour amplification ultérieure, comprenant :
(a) le couplage d'un rayonnement laser d'entrée (1) dans un filtre spectral actif multipasse (2), ledit filtre spectral actif multipasse (2) comprenant un diviseur de faisceau laser (4) et une ligne à retard annulaire (5),
(b) la division du rayonnement laser d'entrée (1) en deux parties par le diviseur de faisceau laser (4) et la délivrance d'une partie du rayonnement laser d'entrée (1) à une sortie du filtre spectral actif multipasse (2) et l'autre partie du rayonnement laser d'entrée (1) à la ligne à retard annulaire (5),
(c) l'exécution d'un conditionnement spectral prédéfini du rayonnement, un conditionnement de puissance du rayonnement et une prévention des oscillations à l'intérieur de ladite ligne à retard annulaire (5),
(d) la division du rayonnement se propageant dans la ligne à retard annulaire (5) en une première partie et une seconde partie par le diviseur de faisceau laser (4) ; la délivrance de ladite première partie à la sortie du filtre spectral actif multipasse (2) et la délivrance de ladite seconde partie en retour à la ligne à retard annulaire (5),
en outre, les étapes (c) et (d) sont répétées à chaque aller-retour de rayonnement dans la ligne à retard annulaire (5), **dans lequel**
ledit conditionnement spectral prédéfini du rayonnement dans ladite ligne à retard annulaire (5) est réalisé par un filtrage spectral destiné à rétrécir le spectre avec un élément de filtrage spectral (6) d'une bande passante pas plus large que 0,1 nm et avec une fonction de transmission ou de réflexion gaussienne, lorentzienne ou autre en forme de cloche,
ledit conditionnement de puissance dans ladite ligne à retard annulaire (5) est réalisé par amplification du rayonnement avec un amplificateur optique (7),
ladite prévention des oscillations à l'intérieur de la ligne à retard annulaire (5) est réalisée en modulant les pertes dans la ligne à retard annulaire (5) avec un commutateur optique (8),
(e) la formation d'un rayonnement laser conditionné sous la forme d'une série (10) d'impulsions de durées variables en sortie dudit filtre spectral actif multipasse (2) formé à partir de ladite une partie du rayonnement laser d'entrée (1), qui est dirigée vers la sortie du filtre spectral actif multipasse (2), et desdites premières parties du rayonnement laser se propageant dans la ligne à retard annulaire (5) après chaque aller-retour, dans lequel la répétition du conditionnement spectral est nécessaire pour obtenir la durée d'impulsion variable, et
(f) la sélection d'une impulsion (61, 102 ou 118) d'une durée prédéfinie de l'ordre de la sous-nanoseconde ou de quelques nanosecondes à partir de la série (10) d'impulsions à durées variables.

2. Procédé selon la revendication 1, dans lequel
la bande passante de l'élément de filtrage spectral (6) n'est pas plus large que 0,04 nm au niveau de la zone spectrale de longueur d'onde de 1 µm, et la bande passante est telle que la durée d'impulsion à un niveau de demi-intensité des impulsions (11-61) dans ladite série (10) d'impulsions de durée d'impulsion variable se trouve dans la plage de 50 ps à 400 ps, et celle-ci est une durée limitée par la largeur spectrale.

3. Procédé selon la revendication 1, dans lequel
la bande passante de l'élément de filtrage spectral (6) n'est pas plus large que 0,01 nm au niveau de la zone spectrale de longueur d'onde de 1 µm, et la bande passante est telle que la durée d'impulsion à un niveau de demi-intensité des impulsions (11-61) dans ladite série (10) d'impulsions de durée d'impulsion variable se trouve dans la plage de 170 ps à 1 ns, et celle-ci est une durée limitée par la largeur spectrale.

4. Procédé selon la revendication 1, dans lequel
la bande passante de l'élément de filtrage spectral (6) est telle que la durée d'impulsion à un niveau de demi-intensité de ladite impulsion (61, 102 ou 118) d'une durée prédéfinie se trouve dans la plage de 50 ps à 10 ns, et celle-ci est une durée limitée par la largeur spectrale.

5. Procédé selon l'une quelconque des revendications précédentes, dans lequel
une fréquence de répétition d'impulsion de l'impulsion (61, 102 ou 118) d'une durée prédéfinie se trouve dans la plage allant d'une impulsion unique à une fréquence de répétition de 10 MHz.

6. Appareil de conditionnement d'un rayonnement laser pulsé pour amplification ultérieure, qui est un filtre spectral actif multipasse (2), comprenant :
- une ligne à retard annulaire (5), qui comprend un élément de conditionnement spectral, un élément de conditionnement de puissance et un élément destiné de prévention les oscillations de la ligne à retard annulaire (5) elle-même ; et
- un diviseur de faisceau laser (4) comportant deux ports d'entrée et deux ports de sortie et configuré pour diviser un rayonnement laser d'entrée (1) en deux parties et pour diriger une partie vers une sortie du filtre spectral actif multipasse (2) et l'autre partie dans ladite ligne à retard annulaire (5) et, après chaque aller-retour de rayonnement dans la ligne à retard annulaire (5), pour diviser un rayonnement laser se propageant dans la ligne à retard annulaire (5) en une première partie et en une seconde partie et pour diriger ladite première partie vers la sortie du filtre spectral actif multipasse (2) et ladite seconde partie en retour vers la ligne à retard annulaire (5), **dans lequel**
- ledit élément de conditionnement spectral est un élément de filtrage spectral (6) configuré pour rétrécir le spectre avec une fonction de transmission ou de réflexion gaussienne, lorentzienne ou autre en forme de cloche, dans lequel l'élément de filtrage spectral (6) possède une bande passante pas plus large que 0,1 nm,
- ledit élément de conditionnement de puissance est un amplificateur optique (7),
- ledit élément destiné de prévention les oscillations de la ligne à retard annulaire (5) elle-même est un commutateur optique (8) qui module les pertes dans la ligne à retard annulaire (5), et
- à la sortie dudit filtre spectral actif multipasse (2), un rayonnement laser conditionné est formé sous la forme d'une série (10) d'impulsions de durées variables de l'ordre de la sous-nanoseconde ou de quelques nanosecondes qui est formée à partir de ladite une partie du rayonnement laser d'entrée (1), qui est dirigée vers la sortie du filtre spectral actif multipasse (2), et desdites premières parties du rayonnement laser se propageant dans la ligne à retard annulaire (5) après chaque aller-retour, et
- dans lequel la durée d'impulsion variable est obtenue par la répétition de la passe à travers l'élément de filtrage spectral (6) dans la ligne à retard annulaire, et
- l'appareil comprend un commutateur optique (3) qui est configuré pour sélectionner une impulsion (61, 102 ou 118) d'une durée prédéfinie de l'ordre de la sous-nanoseconde ou de quelques nanosecondes à partir de la série (10) d'impulsions.

7. Appareil selon la revendication 6, dans lequel
la bande passante de l'élément de filtrage spectral (6) n'est pas plus large que 0,04 nm au niveau de la zone spectrale de longueur d'onde de 1 µm, et la bande passante est telle que les impulsions dans ladite série (10) d'impulsions présentent une durée limitée par la largeur spectrale à un niveau de demi-intensité dans la plage de 50 ps à 400 ps.

8. Appareil selon la revendication 6, dans lequel
la bande passante de l'élément de filtrage spectral (6) n'est pas plus large que 0,01 nm à une région spectrale de longueur d'onde de 1 µm, et la bande passante est telle que les impulsions dans ladite série (10) d'impulsions présentent une durée limitée par la largeur spectrale à un niveau de demi-intensité dans la plage de 170 ps à 1 ns.

9. Appareil selon la revendication 6, dans lequel
la bande passante est telle que les impulsions dans ladite série (10) d'impulsions présentent une durée limitée par la largeur spectrale à un niveau de demi-intensité dans la plage de 50 ps à 10 ns.

10. Appareil selon l'une quelconque des revendications 6 à 9, dans lequel
l'appareil est configuré de sorte qu'une fréquence de répétition de ladite série (10) d'impulsions de durées variables se trouve dans la plage allant d'une série unique à une fréquence de répétition de 10 MHz.

11. Appareil selon l'une quelconque des revendications 6 à 10, dans lequel
ledit diviseur de faisceau laser (4) est un diviseur de fibre 2x2 unique avec un rapport de division égal à 50/50, un port de sortie du diviseur de faisceau laser (4) est connecté à un port d'entrée du diviseur de faisceau laser (4) par la ligne à retard annulaire (5) comprenant :
- un circulateur couplé par fibre (63) qui dirige le rayonnement laser vers un bras latéral de la ligne à retard annulaire (5),
- un filtre spectral à fibres optiques qui rétrécit le spectre dudit rayonnement laser et est situé dans ledit bras latéral de la ligne à retard annulaire (5),
- un segment d'une fibre optique dopée (64) qui compense les pertes des éléments de la ligne à retard annulaire (5) et du diviseur de faisceau laser (4),
- un segment d'une fibre non dopée (65) servant de moyen pour la délivrance du faisceau laser et pour l'obtention d'un temps d'aller-retour *T_{RT}* requis de la ligne à retard annulaire (5).

12. Appareil selon la revendication 11, dans lequel
ledit filtre spectral à fibres optiques est un réseau de Bragg à fibres (66) servant de filtre spectral passe-bande réfléchissant d'une bande passante pas plus large que 0,05 nm.

13. Appareil selon la revendication 11, dans lequel
ledit filtre spectral à fibres optiques est un ensemble de réseaux de Bragg à fibres (66, 66') comportant des bandes passantes différentes et situés dans différentes ramifications (113, 114) du bras latéral (112) de la ligne à retard annulaire (5) ;
sous la commande d'un signal de commande (115), un commutateur (111) incorporé à l'intérieur dudit bras latéral (112) dirige le rayonnement laser vers une première ramification (113) ou vers une seconde ramification (114) du bras latéral (112).

14. Appareil selon l'une quelconque des revendications 11 à 13, dans lequel
ledit temps d'aller-retour *T_{RT}* de la ligne à retard annulaire (5) se trouve dans la plage de 10 ns à 20 ns.
